Europäisches Patentamt

European Patent Office

Office européen des brevets

(11) Veröffentlichungsnummer: **0 170 194**
**A2**

## (12) EUROPÄISCHE PATENTANMELDUNG

(21) Anmeldenummer: **85109217.1**

(22) Anmeldetag: **23.07.85**

(51) Int. Cl.⁴: **G 06 F 15/24**

(30) Priorität: **30.07.84 DE 3428104**

(43) Veröffentlichungstag der Anmeldung:
**05.02.86 Patentblatt 86/6**

(84) Benannte Vertragsstaaten:
**AT CH DE FR GB IT LI**

(71) Anmelder: **Baus, Heinz Georg**
**Wartbodenstrasse 35**
**CH-3626 Hünibach-Thun(CH)**

(72) Erfinder: **Baus, Heinz Georg**
**Wartbodenstrasse 35**
**CH-3626 Hünibach-Thun(CH)**

(74) Vertreter: **Klose, Hans, Dipl.-Phys. et al,**
**Kurfürstenstrasse 32**
**D-6700 Ludwigshafen(DE)**

(54) **Vorrichtung zur Speicherung und Ausgabe von Informationsmengen.**

(57) Eine Vorrichtung zur Speicherung und Ausgabe von Informationsmengen über eine Ware oder dergleichen enthält eine Datenverarbeitungseinheit (24), eine Speichereinheit (30) ein mobiles Ausgabegerät (32) sowie eine Abfrageeinheit (70). Die Vorrichtung soll dahingehend weitergebildet werden, daß Benutzer die Informtionsmengen bei einfacher Bedienbarkeit abfragen können, wobei eine hohe Informationsdichte gegeben sein soll. Es wird zur Lösung vorgeschlagen, daß in der Speichereinheit (30) Bildern entsprechende Informationsmengen über Waren, Produktgruppen oder dergleichen gespeichert sind, un daß das Ausgabegerät (32) auf einem Einkaufswagen (76) angeordnet ist. Das Ausgabegerät (32) ist ferner als ein Monitor mit einem Bildschirm (72) ausgebildet, auf welchem die mittels der Abfrageeinheit (70) abgefragten Informationsmengen als Bilder darstellbar sind.

Fig. 1

**Patentanwalt Dipl.-Phys. HANS KLOSE**
Zugelassener Vertreter vor dem Europäischen Patentamt — 1 —

6700 Ludwigshafen
Kurfürstenstraße 32

Anmelder:     Heinz Georg Baus, Wartbodenstr. 35,
              CH-3626 Hünibach/Thun

Vorrichtung zur Speicherung und Ausgabe
von Informationsmengen

Die Erfindung bezieht sich auf eine Vorrichtung zur Speicherung und Ausgabe von Informationsmengen über eine Ware oder dergleichen, mit einem Rechner, mit einer Speichereinheit, mit einem mobilen Ausgabegerät sowie mit einer Abfrageeinheit.

In Warenhäusern, Supermärkten usw. wird eine Vielzahl von Produkten den Kunden in geeigneten Trägeranordnungen, wie Regalen, Gestellen usw. dargeboten, wobei seitens der Kunden oftmals ein großes Informationsbedürfnis über Verwendungszweck, Einsatzmöglichkeit, Material usw. besteht. Die auf den Warenverpackungen angebrachten Informationen sind oft unvollständig und vermitteln dem Benutzer nicht sämtliche gewünschten Informationen. Ferner werden heute im Hinblick auf Umweltbelastungen die Verpackungen immer kleiner oder entfallen gänzlich, so daß insoweit auch die Möglichkeit einer Informationsübermittlung entfällt. Ferner fehlt besonders bei kleinen Produkten, wie z. B. bei Schrauben, die Möglichkeit einer direkten Informationsübermittlung. Daher sind bisher geeignete und über entsprechende Fachkenntnisse verfügende Verkaufsberater erforderlich, wodurch einer hoher Personal-und Kosten-

**Patentanwalt Dipl.-Phys. HANS KLOSE**
Zugelassener Vertreter vor dem Europäischen Patentamt     _ 2 _

**0170194.. ....**
**6700 Ludwigshafen**
.. . Kurfürstenstraße 32

aufwand entsteht. Ferner besteht auf Ausstellungen, in Museen usw. oftmals ein erhebliches Informationsbedürfnis über die ausgestellten Gegenstände. Ferner besteht ein Informationsbedürfnis über die jeweilige Position des Benutzers oder den Standort der Produkte im Warenhaus usw.

In der europäischen Patentanmeldung 00 99 072 ist eine Vorrichtung zur Kontrolle des Ausganges oder des Einganges von Waren beschrieben. Mittels eines Lesestiftes kann eine die Ware begleitende oder charakterisierende Kennung abgetastet bzw. abgefragt werden. In einem tragbaren Terminal ist eine Tastatur zur weiteren Abfrage vorgesehen. Durch Betätigung einer dieser Tasten können jeweils interessierende Informtionen abgefragt werden. Zwischen dem Terminal und einer Relaisstation erfolgt eine drahtlose Signalübertragung und von dort werden über Drahtleitungen die empfangenen Signale zu einer Zentrale geleitet. Das Terminal enthält ein alpha-nummerisches Anzeigefeld, um Warenart, Preis, Ort und Restbestand auszugeben. Die bekannte Vorrichtung erfordert hinreichende Kenntnisse zur Bedienung und ist ausschließlich für das Personal geeignet, welches über entsprechende Vorkenntnisse verfügt. Ein fremder Benutzer, wie zum Beispiel ein Kunde in einem Warenhaus, kann diese Vorrichtung nicht bedienen. Ferner können mit der Vorrichtung auch nur begrenzte Informationsmengen an den Kunden übermittelt werden.

Ferner ist in der DE-OS 29 41 715 eine elektronische Registrierkasse beschrieben, die eine Eingabeeinheit für Informationsmengen betreffend ein bestimmtes Produkt enthält. Diese Registrierkasse dient ausschließlich zu Registrierzwecken und enthält eine Zentraleinheit, einen Speicher sowie eine Prüfeinrichtung. In Abhängigkeit von der Eingabe und vom Ausgang der Prüfeinrichtung werden geeignete hörbare Signale erzeugt und über einen Lautsprecher ausgegeben. Produktspezifische Informationen hoher Informationsdichte können mit dieser Vorrichtung einem Kunden oder Benutzer nicht ausgegeben werden.

**Patentanwalt Dipl.-Phys. HANS KLOSE**
Zugelassener Vertreter vor dem Europäischen Patentamt    _ 3 _

0170194
6700 Ludwigshafen
Kurfürstenstraße 32

Aus der US-PS 44 51 895 ist ein interaktives, rechnergestütztes Zeichensystem bekannt, das beispielsweise zur Zeichnung einer elektronischen Schaltung oder ähnlichem dient. Das Zeichensystem enthält zwei Bildschirme, wobei ein Benutzer mittels eines Lichtstiftes auf dem einen Bildschirm Symbole abtasten und auf Wunsch auf dem anderen Bildschirm zur Anzeige bringen kann. Die Benutzung eines derartigen Zeichensystems setzt erhebliche Vorkenntnisse voraus und kann keineswegs in einem Warenhaus zur Kundeninformation zum Einsatz gelangen.

In der DE-OS 31 09 599 ist eine Verkaufseinrichtung für Waren mit einer Strichcode-Kennzeichnung beschrieben. Die Verkaufseinrichtung enthält Strichcode-Leser zur Abtastung der auf den Waren oder deren Verpackungen angeordneten Strichcodierungen, um in schneller Folge die vom Kunden gekauften Waren zu identifizieren und den Kaufvorgang preisrechnerisch abzuschließen. Jede Identifizierung ist hinsichtlich Warenart, Warenmenge bzw. -größe des Produktes unzweideutig. Mittels einer Datenverarbeitungseinheit werden die vom Strichcode-Leser erfaßten Informationen verarbeitet, und der gespeicherte Produktpreis wird abgerufen, von einem Registriergerät angezeigt und auf einer dem Kunden zu übergebenden Quittung abgedruckt, wozu noch weitere Informationen, wie z.B. das Gewicht des Produktes, hinzukommen können. Mit dem Registriergerät können für eigene Lagerhaltungs- und Buchungszwecke entsprechende Daten abgespeichert werden.

Der Erfindung liegt die Aufgabe zugrunde, eine Vorrichtung der eingangs genannten Art dahingehend auszubilden, daß produktspezifische Informationen dem Kunden dargeboten werden können. Diese Informationen sollen entsprechend den Erfordernissen optisch und / oder akustisch ausgegeben werden können. Die den Produkten zugeordneten Informationen sollen ferner in einfacher Weise eingebbar bzw. änderbar sein. Das System und insbesondere das Ausgabegerät für die Informationen soll einen kompakten und funktionsgerechten Aufbau aufweisen. Ferner soll das Ausgabegerät einen geringen Platz- und / oder Gewichtsbedarf erfordern. Das System und vor allem das Ausgabegerät soll vom Kunden in einfacher Weise bedient werden können, wobei Spezialkenntnisse nicht erforderlich sein sollen und eine
einfache Handhabung gewährleistet sein soll. Das System soll
nach dem Baukastenprinzip aufzubauen sein, wobei die einzelnen
Komponenten in der jeweils erforderlichen Weise miteinander
kombiniert und / oder gegeneinander ausgetauscht werden sollen. Ferner sollen mit dem System auch umfangreiche Informationsmengen, wie Werbespots, ausführliche Erläuterungen sowie
Hinweise auf weitere, zusammen mit dem Produkt zum Einsatz
gelangende zusätzliche Produkte an Kunden übermittelt werden
können. Ferner soll mit dem System dem Kunden auch das Aufinden von Produkten innerhalb des Warenhauses, Supermarktes usw.
angezeigt bzw. erleichtert werden.

Zur Lösung dieser Aufgabe wird vorgeschlagen, daß in der
Speichereinheit Bildern entsprechende Informationsmengen über
die Waren oder über Produktgruppen gespeichert sind, daß das
Ausgabegerät auf einem Einkaufwagen angeordnet ist und daß das
Ausgabegerät einen Monitor mit einem Bildschirm enthält, auf
welchem die Informationsmengen als Bilder darstellbar sind.

Die vorgeschlagene Vorrichtung stellt ein Produktinformations-
und Display-System dar und ermöglicht eine besonders zuverlässige und den jeweiligen Anforderungen in einfacher Weise
anpaßbare Übermittlung von produktspezifischen Informationen
an die interessierte Person. In der Speichereinheit sind die
produktspezifischen Informationsmengen und / oder Angaben zur
Position eingegeben, die erfindungsgemäß Angaben über Beschaffenheit, Einsatzmöglichkeit, Werkstoff usw. beinhalten. Die
Informationsmengen können ferner auch Verarbeitungsanleitungen, Erläuterungen zu Zubehör sowie Angaben über den Ort
und das Auffinden von weiteren vergleichbaren oder dazugehörenden Produkten im Warenhaus enthalten. Eine hohe Informationsdichte ist gegeben. Es sind erfindungsgemäß in einem
Warenhaus eine Anzahl von mobilen Ausgabegeräten, auf den
verschiedenen Einkaufswagen vorhanden. Jeder Benutzer hat
somit sein eigenes Ausgabegerät zur Verfügung, so daß gegenseitige Beinträchtigungen entfallen, und jeder Kunde ungestört
die von ihm gewünschte Informationsmenge abfragen kann. Von
besonderer Bedeutung ist im Rahmen der Erfindung das dezentral

Patentanwalt Dipl.-Phys. HANS KLOSE
Zugelassener Vertreter vor dem Europäischen Patentamt     - 5 -

0170194
6700 Ludwigshafen
Kurfürstenstraße 32

ausgestaltete System, so daß autonome Einheiten mit Datenverarbeitungseinheit bzw. Rechner, Speichereinheit, Ausgabegerät sowie Abfrageeinheit räumlich zusammengefaßt und auf dem Einkaufswagen angeordnet werden. Diese autonomen Einheiten sind von einander unabhängig, wobei besondere Verdrahtungen, Sender oder ähnliches im Warenhaus oder dergleichen nicht erforderlich sind. Die ebenfalls im Rahmen der Erfindung liegende zentrale Anordnung der Speichereinheit und auch der Datenverarbeitungseinheit hat hingegen den Vorteil einer vergleichsweise einfachen Eingabe und ggfs. einer einfachen Änderung von Informationsmengen, wobei darüberhinaus auch Daten für die Lagerhaltung, Buchungszwecke und den Warenfluß usw. abgespeichert werden können. Schließlich liegen im Rahmen der Erfindung auch solche Systeme, bei welchen eine teilweise dezentrale Anordnung vorgenommen wird; hierbei kann beispielsweise einer Anzahl von Verkaufswänden oder Verkaufsregalen jeweils ein separater Speicher zugeordnet werden, wobei in jedem Speicher unterschiedliche Informationsmengen und zwar zu dem im jeweiligen Verkaufsregal befindlichen Produkten gespeichert sind. Eine derartige Ausgestaltung hat den für die Praxis nicht unwesentlichen Vorteil, daß komplette Baueinheiten, enthaltend sowohl das Verkaufsregal usw. als auch Speichereinheit sowie Datenverarbeitungseinheit, in relativ großen Stückzahlen gefertigt und somit auch kostengünstig angeboten werden können. Derartige Einheiten können ohne Schwierigkeiten auch in bestehenden Gebäuden oder Warenhäusern nachträglich eingebaut werden, ohne daß aufwendige Verkabelungen oder ähnliches erforderlich werden. Wesentlich ist hierbei auch noch, daß die mobilen Ausgabegeräte mit der jeweiligen Baueinheit Verbindung aufnehmen können, wozu auch hier bevorzugt drahtlose Verbindungen oder aber auch Steckverbindungen ggfs. auch zur Übertragung von Energie und Informationsmengen vorgesehen werden.

Mit der Datenverarbeitungseinheit werden Koordinationsfunktionen, die Verwaltung, die Datenübermittlung der in Informationsmengen sowie die Verarbeitung mit der Abfrageeinheit eingegebenen Signale erledigt. Mittels der Datenverarbeitungseinheit kann in besonders einfacher Weise die Organisation der Datenmengen in verschiedenen hierachischen Ebenen vorgenommen werden; so kann zunächst ein Auswahlmenü bei Bedarf dem Benutzer dargeboten werden, wobei diese Darbietung ggfs. automatisch und / oder in Abhängigkeit von der jeweiligen Position erfolgen kann. Wenn dann der Benutzer aus dem dargebotenen Menü mittels der Abfrageeinheit eine Auswahl trifft, wird die ausgewählte Informationsmenge dargeboten, wobei ggfs. noch weitere Auswahlmöglichkeiten für den Benutzer enthalten sein können, bis schließlich dem Benutzer die letztendlich gesuchte Informationsmenge über das Produkt oder seinen Standort oder ähnliches dargeboten wird. Dieser Dialog erfolgt unter Zuhilfenahme der Datenverarbeitungseinheit mit dem Benutzer, wobei die abgespeicherten Informationsmengen in der geeigneten Form zur Verfügung gestellt, übertragen und dem Benutzer dargeboten werden; die Datenselektion, das Suchen und Finden von Informationsmengen usw. wird mittels der Datenverarbeitungseinheit durchgeführt.

Die Speichereinheit kann je nach Anforderungen zentral oder auch dezentral direkt im Einkaufswagen bzw. kombiniert mit dem Ausgabegerät angeordnet sein. Die zentrale Speicherung hat den Vorteil, daß ohne besonderen Aufwand große Datenmengen gespeichert werden können, während eine dezentrale Anordnung eine insbesondere drahtlose Übermittlung zum Ausgabegerät überflüssig macht. Der Speicher kann Bildplatten, Magnetbänder, Magnetplatten, Floppy-Discs und ähnliches enthalten. Es sei ausdrücklich festgehalten, daß Texte mit einem äußerst geringen Aufwand eingegeben oder auch geändert werden können, wozu die heute üblichen Kenntnisse einer Sekretärin zur Datenverarbeitung mit Datensichtgeräten ausreicht. Bei optischen Informationsmengen ist hingegen die Informationsdichte, beispielsweise auf Videoplatten, erheblich größer, wobei jedoch für die Eingabe und ggfs. erforderlichen Änderungen ein entsprechender Aufwand erforderlich ist. Erfindungsgemäß enthält die Speichereinheit bei Bedarf auch unterschiedliche Speichergeräte, um beispielsweise auf Floppy-Disks sämtliche Textinformationen zu speichern und auf Bildplatten ausschließlich visuelle Informationsmengen abzuspeichern; diese unterschiedlichen Informationsmengen werden im Rahmen der Erfindung gemischt und auf

**Patentanwalt Dipl.-Phys. HANS KLOSE**
Zugelassener Vertreter vor dem Europäischen Patentamt

0170194

6700 Ludwigshafen
Kurfürstenstraße 32

– 7 –

einem Bildschirm oder dergleichen gemeinsam dargeboten. Die auf der Floppy-Disk enthaltenen Texte lassen sich sehr leicht ändern, so daß variable Größen, wie insbesondere der Preis, sehr leicht eingegeben werden können. Auf der Bildplatte sind hingegen die "dauerhaften" Informationsmengen enthalten. Das Ausgabegerät kann im Rahmen der Erfindung auch als ein tragbares Gerät, das der Benutzer um seine Schulter hängen kann, ausgebildet sein. Die Abfrageeinheit ist erfindungsgemäß unmittelbar an das mobile Ausgabegerät gekoppelt. Mit der Abfrageeinheit werden vom Benutzer dem gewünschten Produkt zugeordnete Signale über die Datenverarbeitungseinheit an die Speichereinheit gegeben, um die gewünschte Informationsmenge an das Ausgabegerät zu liefern.

In einer besonderen Ausführungsform sind die Speichereinheit und das Ausgabegerät zu einer kompakten Baueinheit zusammengefaßt. Diese Baueinheit ist also ebenfalls mobil und kann ohne Schwierigkeiten auf dem Einkaufswagen angeordnet werden. Es bedarf keiner besonderen Hervorhebung, daß bei einem Ausgabegerät mit einem Bildschirm die Anordnung und Befestigung an einem Einkaufswagen oder dergleichen derart getroffen wird, daß der Benutzer ohne Schwierigkeiten die auf dem Bildschirm dargebotenen Informationen gut und deutlich sehen kann. Sofern es sich um ein rein akustisches Ausgabegerät handelt, kann dieses auch an einer vom Benutzer nicht unmittelbar erreichbaren Stelle angeordnet werden. In jedem Falle wird im Rahmen der Erfindung die Anordnung des Ausgabegerätes und ggfs. auch der kompakten Baueinheit derart getroffen, daß eine Beschädigung beim Rangieren der Wagen oder dergleichen nicht eintreten kann.

In einer besonders wesentlichen Ausführungsform ist die Abfrageeinheit direkt dem Ausgabegerät zugeordnet und insbesondere als eine Berührungsscheibe (touch screen) ausgebildet, um einen direkten Dialog zu ermöglichen. Eine besondere Tastatur entfällt und die erforderlichen Kommandos bzw. Signale können in besonders einfacher Weise eingegeben werden. Die Berührungsscheibe wird direkt auf bzw. vor dem Bildschirm eines Monitors angeordnet und enthält auf einem durchsichtigen Glasschirmträger eine leitende Schicht, wobei Auflösungen von 100

0170194

Patentanwalt Dipl.-Phys. HANS KLOSE          6700 Ludwigshafen
Zugelassener Vertreter vor dem Europäischen Patentamt    _ 8 _          Kurfürstenstraße 32

x 100 bei üblichen Bildschirmen gegeben sind. Wird mit einem
Finger oder mit einem Metallstift eine bestimmte Stelle der
Berührungsscheibe berührt, so werden entsprechende Berührungskoordinaten an die Elektronik und insbesondere an die Datenverarbeitungseinheit gegeben, mittels welcher die Zuordnung zu
der auf dem Bildschirm an der entsprechenden Stelle angezeigten Angabe hergestellt wird.

In einer alternativen Ausführungsform ist das Abfragegerät
derart ausgebildet, daß Codierungen, die dem jeweiligen Produkt zugeordnet oder auf diesem oder auf dessen Verpackung
vorgesehen sind, erfaßt werden können. Die dem Produkt zugeordnete Codierung, die bisher ausschließlich zur Preisauszeichnung sowie zur Überwachung des Warenflusses diente, wird
nunmehr in überraschend einfacher Weise zur Lieferung von
Informationen an den Benutzer benutzt. Die Codierung ist insbesondere als ein Strich- oder Barcode aufgebaut, doch können
im Rahmen dieser Erfindung entsprechend codierte Magnetbänder,
magnetische Schichten oder ähnliches vorgesehen werden.
Strichcodierungen, bei welchen die Breite und Anordnung der
Striche sowie der Zwischenräume den jeweiligen Informationswert bestimmt, können mit einem optischen Abtastsystem leicht
und zuverlässig gelesen werden. Derartige Lesegeräte, die auch
als Scanner-Pistolen bezeichnet werden, haben ein geringes
Baugewicht und Volumen und können vom Benutzer in einfacher
Weise in die Hand genommen werden.

Um einen einfachen und variablen Aufbau zu erhalten, wird in
einer wesentlichen Ausführungsform vorgeschlagen, daß zwischen
dem Ausgabegerät und der Datenverarbeitungseinheit und / oder
der Speichereinheit ein drahtloses Übertragungssystem vorgesehen ist. Aufwendige Verdrahtungen und Leitungen entfallen,
wobei die drahtlose Übertragung insbesondere mit elektromagnetischen Wellen oder Infrarotstrahlen erfolgt. Das mobile Ausgabegerät enthält geeignete Empfangseinrichtungen mit Antennen
oder dergleichen, und insbesondere an der Decke oder am Boden
des Warenhauses befinden sich entsprechende Empfangs- und
Sendeeinrichtungen, die ihrerseits mit der Datenverarbeitungseinheit bzw. der Speichereinheit in Verbindung stehen. Wählt

Patentanwalt Dipl.-Phys. HANS KLOSE
Zugelassener Vertreter vor dem Europäischen Patentamt — 9 —

0170194
6700 Ludwigshafen
Kurfürsterstraße 32

der Benutzer mit der Abfrageeinheit ein entsprechendes Produkt
an, so werden diese Signale drahtlos weitergesendet, und die
Mobilität des Benutzer bzw. des Verkaufswagens ist in keiner
Weise beeinträchtigt.

In einer besonders wesentlichen Ausgestaltung wird auf dem
Ausgabegerät in Abhängigkeit der jeweiligen Position des Ausgabegerätes innerhalb des Warenhauses oder dergleichen eine
bestimmte Auswahl von anzuwählenden Informationsmengen bereitgestellt. Dem Benutzer wird ein Lageplan zur Positionsbestimmung dargeboten, und eine einfache Orientierung innerhalb des
Warenhauses ist mit einem äußerst geringen Aufwand geschaffen;
mit dem gleichen System erfolgt also sowohl die Positionsbestimmung als auch die Übermittlung der gewünschten produktspezifischen Informationen. Befindet sich der Benutzer beispielsweise im Eingangsbereich des Warenhauses, so werden auf dem
Ausgabegerät die verschiedenen Abteilungen mit den unterschiedlichen Produktgruppen zur Auswahl angeboten. Der Benutzer braucht dann lediglich die von ihm angestrebte Produktgruppe, beispielsweise Eisenwaren, anzuwählen. Der Benutzer
erhält dann über das Ausgabegerät die Information über den
kürzesten Weg bzw. über die Lage der Produktgruppe im Warenhaus angeboten. Hat dann der Benutzer die Produktgruppe erreicht, hat er also eine andere definierte Position im Warenhaus erreicht, so wird eine weitere Auswahl von Informationsmengen dargeboten, und zwar zu den Produkten, die sich in den
nächstliegenden Warenregalen oder dergleichen befinden. Nunmehr wird der Benutzer die Informationsmenge, beispielsweise
zu Schrauben, abfragen, die ihn gerade interessiert. Das Warenhaus ist bei dieser wesentlichen Ausgestaltung sozusagen in
Sektoren unterteilt, wobei in jedem Sektor eine spezifische
Auswahl-Informationsmenge dem Benutzer dargeboten werden kann.
Den genannten Sektoren sind entsprechende Sendeantennen oder
ähnliches zugeordnet, um aus der Datenverarbeitungseinheit
bzw. der Speichereinheit die jeweils zugeordnete Auswahl-Informationsmenge automatisch an das Ausgabegerät zu liefern.
Das System ist in seinen Anwendungsmöglichkeit sehr flexibel.
Im Rahmen der Erfindung können auf dem Boden des Warenhauses
geeignete Markierungen für den Verkaufswagen bzw. die Ausgabe-

Patentanwalt Dipl.-Phys. HANS KLOSE
Zugelassener Vertreter vor dem Europäischen Patentamt    — 10 —

0170194

6700 Ludwigshafe
Kurfürstenstraße 32

einheit vorgesehen werden, damit eine zuverlässige Datenübermittlung gewährleistet wird. Diese Markierungen weisen erfindungsgemäß eine definierte Zuordnung zu den bereis erwähnten
Senderantennen oder ähnlichem auf, und darüberhinaus ist auch
eine definierte Zuordnung zu den Warenträgern bzw. Produkten
vorhanden, so daß eine automatische Anzeige bzw. Ausgabe der
Auswahl-Informationsmengen mit einem äußerst geringen Aufwand
sichergestellt ist.

Die Abfrageeinheit ist im Rahmen der Erfindung unmittelbar mit
dem Ausgabegerät verbunden. Die Abfrageeinheit kann als Tastatur, die in unmittelbarer Nähe eines Bildschirmes angeordnet
ist, ausgebildet sein. Auch die sogenannte Maus-Technologie
kann zum Einsatz gelangen, wobei eine drehbare Kugel zur Steuerung einer Markierung oder eines Cursors auf dem Bildschirm
vorgesehen ist. Ferner können die in Verbindung mit Videospielen bekannten Joysticks zum Einsatz gelangen, um eine Markierung oder ähnliches auf einem Bildschirm in eine gewünschte
Position zu bringen und damit die Auswahl vorzunehmen. Ferner
kann als Eingabeeinheit auch ein akustisches Dialogsystem
vorgesehen werden, wobei der Benutzer seine Auswahlbefehle
über ein Mikrophon der Datenverarbeitungseinheit zuführt,
mittels welcher die Sprachsynthese und die Abfrage der
gewünschten Informationsmenge durchgeführt wird.

Um eine einfache Übertragung der Informationsmenge und / oder
der elektrischen Energie zum Ausgabegerät zu erhalten, wird in
einer wesentlichen Ausführungsform vorgeschlagen, daß das
Ausgabegerät mit einer kuppelbaren Steckvorrichtung mit der
Datenverarbeitungseinheit und / oder der Speichereinheit verbindbar ist. Am Ausgabegerät befindet sich ein zweckmäßig
flexibles Kabel, das bei Bedarf über einen Spezialstecker an
eine entsprechende Kupplung anschließbar ist oder umgekehrt,
die dem jeweils gewünschten Produkt zugeordnet ist. Die Steckvorrichtung bildet somit die Abfrageeinheit, wobei automatisch
beim Einkuppeln die Datenübermittlung erfolgt. Im Rahmen der
Erfindung kann gleichzeitig auch die Energieeinspeisung bzw.
die Wiederaufladung von entsprechenden Batterien im Ausgabegerät erfolgen.

**Patentanwalt Dipl.-Phys. HANS KLOSE**
Zugelassener Vertreter vor dem Europäischen Patentamt     - 11 -

0170194

6700 Ludwigshafen

Kurfürstenstraße 32

In einer weiteren wesentlichen Ausführungsform enthält das Ausgabegerät zur Stromversorgung aufladbare Batterien, die in einer Wartestellung des Verkaufswagens oder des Ausgabegerätes automatisch aufladbar sind. Hat ein Kunde nach dem Verlassen der Kasse seinen Wagen ausgeräumt und ist der Wagen danach in seine Wartestellung gebracht worden, so erfolgt automatisch die Aufladung, so daß das System auch immer voll einsatzbereit ist. Die Wiederaufladung der Batterien, es seien hier nur beispielshaft Nickel-Cadmium-Batterien genannt, wird insbesondere dadurch erreicht, daß der Wagen auf entsprechenden Schienen läuft oder an diesen entlang fährt. Über die Schienen erfolgt die Stromübertragung auf zugeordnete Stromabnehmer am Wagen. Im Rahmen der Erfindung liegt auch ein flexibler Stab, ähnlich der Stromzuführung bei Motorskootern, wobei dieser Stab an einem entsprechenden Drahtgeflecht, sei es im Boden oder an der Decke, im Bereich der Wartestation entlang läuft.

Schließlich liegt im Rahmen der Erfindung auch eine berührungsfreie induktive Einspeisung, wobei in einer Wartestation oder im Boden oder der Wand und ferner im Einkaufskaufswagen bzw. Ausgabegeräten geeignete induktive Übertragungssysteme mit Spulen angebracht sind.

Die Erfindung wird nachfolgend anhand der in der Zeichnung dargestellten Ausführungsbeispiele näher erläutert. Es zeigen:

Fig. 1     eine prinzipielle Darstellung eines Einkaufwagens mit einem Monitor und einem Rechner,

Fig. 2     schematisch eine Ausführungsform, bei welcher Codierungen einer Ware mittels eines Lesegerätes abtastbar sind.

**Patentanwalt Dipl.-Phys. HANS KLOSE**
Zugelassener Vertreter vor dem Europäischen Patentamt   _ 12 _

6700 Ludwigshafen
Kurfürstenstraße 32

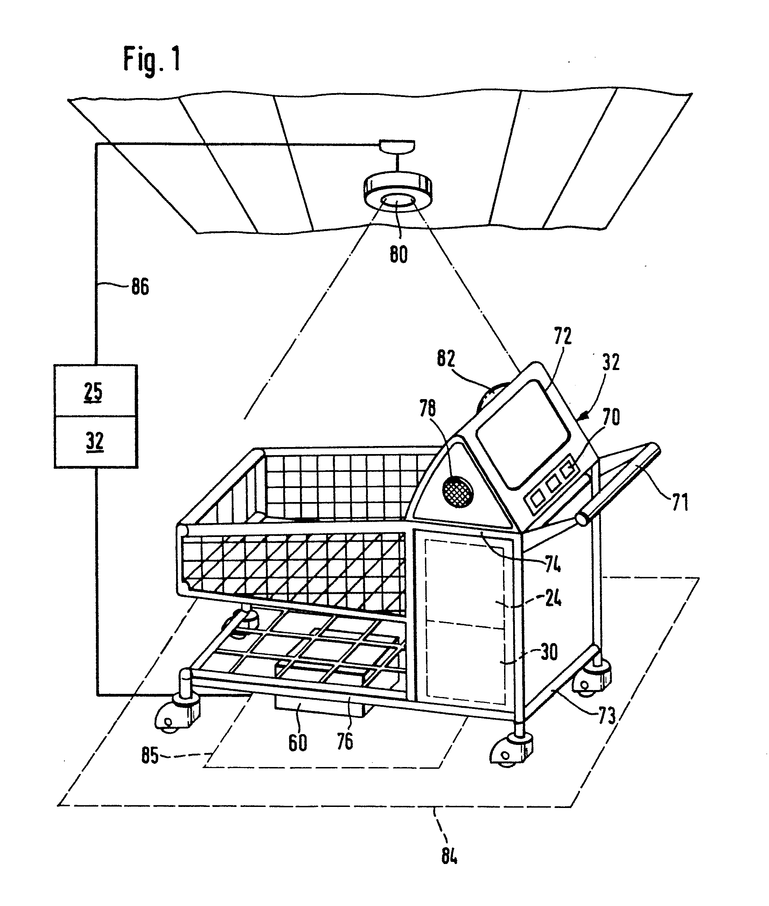

Fig. 1 zeigt schematisch einen Einkaufwagen 76 mit einem Ausgabegerät 32, das ein Bildschirm 72 enthält. Das Ausgabegerät 32 ist erfindungsgemäß in der Nähe des Handgriffes 71 bzw. über der Oberkante 74 des Einkaufswagens 76 angeordnet. Die auf dem Bildschirm 72 dargebotene Informationsmengen bzw. Bilder sind für einen Kunden somit ohne weiteres gut zu erkennen.

Das Ausgabegerät 32 ist wie der Einkaufswagen mobil und kann von einem Benutzer bzw. Kunden im Warenhaus in gewohnter Weise hin- und hergeschoben werden. Auf der gleichen Seite wie der Bildschirm 72 des Ausgabegerätes 32 befindet sich eine Abfrageeinheit 70, die hier schematisch als Tastatur angedeutet ist. Das Ausgabegerät 32 und ebenso der Rechner bzw. die Datenverarbeitungseinheit 24 sowie die Speichereinheit sind auf dem Einkaufswagen 76 in einem hierzu vorgesehenen Fach oder Rahmengestell 73 angeordnet, so daß im übrigen der Einkaufswagen in gewohnter Weise zur Aufnahme von eingekauften Waren benutzt werden kann. Der Bereich bzw. das Fach 73 befindet sich in umittelbarer Nähe des Handgriffes 21, so daß einerseits die auf dem Ausgabegerät dargebotenen Informationsmengen für den Kunden auch bei angefülltem Einkaufswagen gut erkennbar sind und andererseits auch die Abfrageeinheit 70 unter allen Bedingungen gut benutzt werden kann.

Die Datenverarbeitungseinheit 24 ist bei dieser Ausführungsform ebenfalls auf dem Einkaufswagen 76 angeordnet, und es ist ferner auch eine Speichereinheit 30 vorgesehen. In der Speichereinheit sind die Informationsmengen eingespeichert, die mit der Abfrageeinheit 70 abrufbar sind und mit dem Bildschirm 72 visuell einem Benutzer dargeboten werden können. Mit einem Lautsprecher 78 können entsprechende Informationen auch akustisch ausgegeben werden. Das dargestellte System ist autonom, wobei die erforderlichen Informationsmengen sämtlich in der Speichereinheit 30 enthalten sind. Es handelt sich also um ein autonomes, dezentrales System, wobei auch die Stromversorgungseinheit 58 mit wiederaufladbaren Batterien oder ähnlichem auf dem Einkaufswagen 76 angeordnet ist.

**Patentanwalt Dipl.-Phys. HANS KLOSE**
Zugelassener Vertreter vor dem Europäischen Patentamt — 13 —

0170194
6700 Ludwigshafen
Kurfürstenstraße 32

In der Zeichnung ist ferner schematisch an der Decke ein Sende-
und Empfangsgerät 80 zur Übertragung von Signalen bzw. Informationsmengen angedeutet, wobei auch auf dem Einkaufswagen
76 ein zugeordnetes Sende- und Empfangssystem 82 vorhanden
ist. Es ist also ein drahtloses Übertragungssystem vorhanden,
das mit elektromagnetischen Wellen oder mit Infrarotstrahlen
arbeitet. Das Sende- und Empfangsgerät 80 ist über eine Leitung 86 mit einer zentralen Datenverarbeitungseinheit 25 sowie
mit einer zentralen Speichereinheit 32 verbunden. Es sei ausdrücklich angemerkt, daß im Rahmen der Erfindung bei dieser
Ausführungsform die Datenverarbeitungseinheit 24 sowie die
Speichereinheit 30 auf dem Einkaufswagen 76 gleichwohl vorhanden sein können, jedoch gegebenenfalls auch entfallen können.
Mit der Abfrageeinheit 70 eingegebene Signale werden über die
Sende- und Empfangseinheiten 82, 80 an die zentral angeordnete
Datenverarbeitungseinheit gegeben, um die gewünschten Informationsmengen abzurufen, die dann ihrerseits über das Übertragungssystem gelangen und von der Sende- und Empfangseinheit 82
empfangen werden. Innerhalb des Warenhauses sind eine Vielzahl
von Sende – und Empfangseinheiten 80 angeordnet, wobei ohne
Schwierigkeiten auch eine definierte räumliche Zuordnung zu
bestimmten Warenregalen bzw. Produktgruppen erfolgen kann. Um
eine eindeutige Zuordnung zu erhalten, können ggfs. auf dem
Boden geeignete Markierungen 84 vorgesehen werden. Das Warenhaus oder dergleichen ist also in bestimmte Sektoren unterteilt, so daß ggfs. auch automatisch Informationen über die
momentane Position des Einkaufswagens 76 oder auch über eine
gewünschte noch zu erreichende Position dem Benutzer mit dem
Ausgabegerät 32 dargeboten werden kann. Ferner sind im Boden
Induktionsschreiben 85 vorhanden, welchen an derr Unterseite
des Einkaufswagens 76 eine Einheit 60 mit entsprechenden Spulen zugeordnet ist. Es kann somit auf induktivem Wege sowohl
eine Energieübertragung als auch eine Datenübertragung erfolgen. Die Induktionsschleife ist über elektrische Leitungen mit
der zentralen Datenverarbeitungseinheit 25 sowie einer zentralen Speichereinheit 32 verbunden. Es sei festgehalten, daß im
Rahmen der Erfindung die Informationsmengen je nach Anforderungen dezentral auf dem Einkaufswagen der dort vorgesehenen
Speichereinheit 30 und / oder auch zentral in der zentralen

Patentanwalt Dipl.-Phys. HANS KLOSE
Zugelassener Vertreter vor dem Europäischen Patentamt    – 14 –

0170194
6700 Ludwigshafen
Kurfürstenstraße 32

Speichereinheit 30 abgespeichert sein können. Auch kombinierte Systeme, wobei Teilinformationen zentral und andere Informationsmengen dezentral gespeichert sind, liegen im Rahmen der Erfindung. Im Boden eines Warenhauses oder ebenfalls auch an geeigneten Stellen in Wänden oder an den Regalen können entsprechende Induktionsschleifen angeordnet sein, um an jeder Stelle des Warenhauses oder dergleichen eine sichere Daten- und/oder Energieübertragung zu gewährleisten.

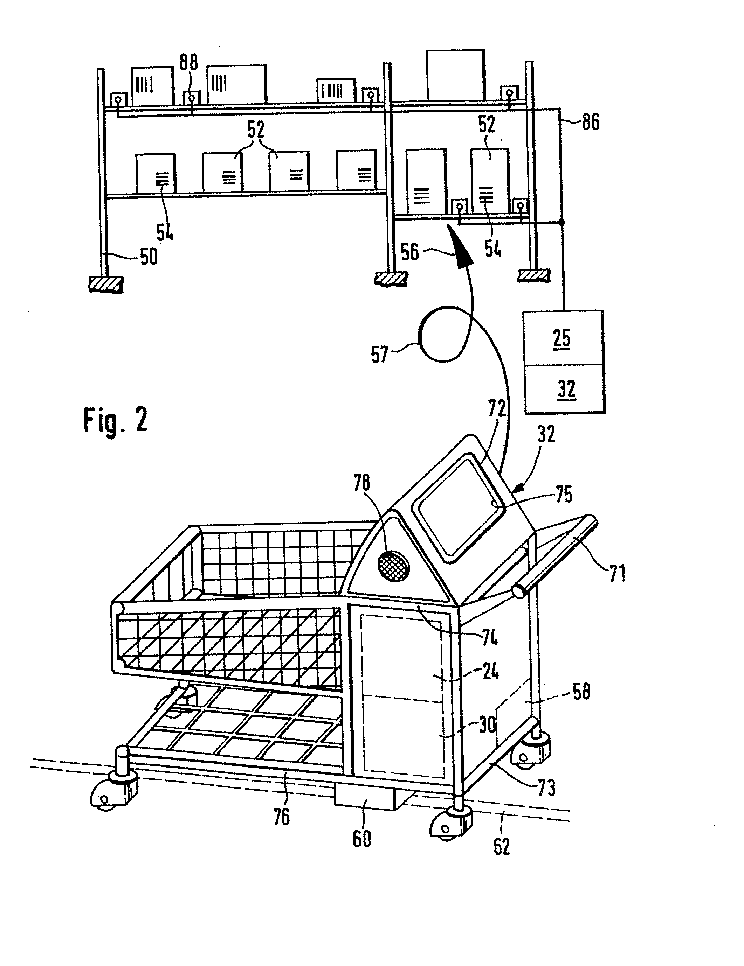

Fig. 2 zeigt eine Ausführungsform, bei welcher dem Bildschirm 72 der Abfrageeinheit 32 als Abfrageeinheit eine sogenannte Berührungsscheibe 75 zugeordnet ist. Diese Berührungsscheibe 75 befindet sich in gewohnter Weise vor dem Bildschirm 72 und ermöglicht bei Berührung die Erfassung von entsprechenden Koordinaten des Berührungspunktes. Somit kann bei Anzeige auf dem Bildschirm 72 einer Frage oder einer Verzweigung oder eines Auswahlmenüs durch entsprechendes Antippen der Bereiche die zugeordnete Koordinatenabfrage durchgeführt und in einfacher Weise die gewünschte Eingabe durchgeführt werden.

Ferner ist ein Lesegerät 56 zur Abtastung von Codierungen 54 an den dargebotenen Produkten 52 vorhanden. Die Produkte 52 sind in gewohnter Weise in Regalen oder sonstigen Trägeranordnungen 50 dem Benutzer dargeboten und mittels des Lesegerätes 56 erfolgt die Abfrage. Jedes der Produkte 52 ist mit der entsprechenden Codierung 54, insbesondere nach Art eines Barcodes versehen, der aus Strichen unterschiedlicher Breite, Abständen usw. besteht. Eine solche Codierung entspricht insbesondere der Artikelnummer und enthält Angaben zum Gewicht, Mengen usw. Im Rahmen der Erfindung liegen auch magnetische oder sonstige Codierungen und Kennzeichnungen, mit welchen in enntsprechender Weise Informationen abgefragt werden können. Auf dem Einkaufswagen 76 befindet sich weiterhin eine Spromversorgungseinheit 58. Diese Stromversorgungseinheit enthält wiederaufladbare Batterien. An der Unterseite des Einkaufswagens 76 befindet sich ferner eine Einrichtung 60 zur Stromübertragung. Diese Einheit 60 kann erfindungsgemäß als ein Stromabnehmer in Form eines Schleifschuhes oder mit sonstigen

Patentanwalt Dipl.-Phys. HANS KLOSE
Zugelassener Vertreter vor dem Europäischen Patentamt     _ 15 _

6700 Ludwigshafen
Kurfürstenstraße 32

Benutzung in eine Wartestation geschoben, so kann dort über der Einheit 60 und entsprechende Stromschienen 62, Steckeinrichtungen oder ähnliches die Stromübertragung zur Aufladung der Batterien der Stromversorgungseinheit 58 erfolgen. Im Rahmen der Erfindung kann die Energieübertragung mittels der Einheit 60 auch berührungslos erfolgen, und zwar zweckmäßig mit der Einheit 60 zugeordneten Induktionsspulen; entsprechende Induktionsspulen sind dann auch zweckmäßig in der Wartestation oder an sonstigen Stellen im Boden oder an Wänden des Warenhauses vorgesehen.

Alternativ oder zusätzlich können im Regal 50 Steckvorrichtungen 88 vorgesehen sein, die den Waren bzw. Produkten 52 zugeordnet sind und über Kabel mit der Speichereinheit 32 und der Datenverarbeitungseinheit verbunden sind. Die Abfrage erfolgt über das nun als Stecker ausgebildete Lesegerät 56.

0170194
6700 Ludwigshafen
Kurfürstenstraße 32

Bezugszeichenliste

| 24, 25 | Datenverarbeitungseinheit |
|---|---|
| 30, 32 | Speichereinheiit |
| 32 | Ausgabegerät |
| 52 | Ware |
| 54 | Codierung |
| 56 | Lesegerät |
| 57 | Kabel |
| 58 | Stromversorgungseinheit |
| 60 | Einheit |
| 62 | Schiene |
| 70 | Abfrageeinheit |
| 71 | Handgriff |
| 72 | Bildschirm |
| 73 | Gestell |
| 74 | Oberkante |
| 75 | Berührungsscheibe |
| 76 | Einkaufswagen |
| 78 | Lautsprecher |
| 80, 82 | Sende- und Empfangseinheit |
| 84 | Markierung |
| 85 | Induktionsschleifen |
| 86 | Leitung |
| 88 | Steckvorrichtung |

Patentanwalt Dipl.-Phys. HANS KLOSE
Zugelassener Vertreter vor dem Europäischen Patentamt    – 17 –

.0170194

6700 Ludwigshafen
Kurfürstenstraße 32

Ansprüche

1. Vorrichtung zur Speicherung und Ausgabe von Informationsmengen über eine Ware oder dergleichen, mit einer Datenverarbeitungseinheit, mit einer Speichereinheit, mit einem mobilen Ausgabegerät sowie mit einer Abfrageeinheit, dadurch gekennzeichnet, daß in der Speichereinheit (30) Bildern entsprechende Informationsmengen über die Waren, Produktgruppen oder dergleichen gespeichert sind, daß das Ausgabegerät (32) auf einem Einkaufwagen (76) angeordnet ist und daß das Ausgabegerät (32) einen Monitor mit einem Bildschirm (72) aufweist, auf welchem die Informationsmengen als Bilder darstellbar sind.

2. Vorrichtung nach Anspruch 1, dadurch gekennzeichnet, daß die Speichereinheit (30) auf dem Einkaufswagen (76) angeordnet und mit dem Ausgabegerät (32) zu einer kompakten Baueinheit zusammengefaßt ist.

3. Vorrichtung nach Anspruch 1 oder 2, dadurch gekennzeichnet, daß der Einkaufswagen (76), bevorzugt im Bereich eines Handgriffes (71) einen Bereich oder ein Gestell (73) zur Aufnahme des Ausgabegerätes (32) und zweckmäß auch der Datenverarbeitungseinheit (24) und / oder der Speichereinheit (30) aufweist.

4. Vorrichtung nach einem der Ansprüche 1 bis 3, dadurch gekennzeichnet, daß die Abfrageeinheit (70) direkt am Ausgabegerät (32) und / oder in dem vorderen Bereich in der Nähe des Handgriffes (71) angeordnet ist und insbesondere als Tastenfeld, Lesegerät (56) oder als Berührungsscheibe (70) ausgebildet ist.

**Patentanwalt Dipl.-Phys. HANS KLOSE**
Zugelassener Vertreter vor dem Europäischen Patentamt — 18 —

6700 Ludwigshafen
Kurfürstehstraße 32

5. Vorrichtung nach einem der Ansprüche 1 bis 4, dadurch gekennzeichnet, daß das Ausgabegerät (32) zweckmäßig in einem Winkel zur Horizontalen geneigt, über der Oberkante (74) des Einkaufswagens (76) angeordnet ist und / oder daß die Datenverarbeitungseinheit (24) und / oder die Speichereinheit (30) sowie die Stromversorgungseinheit (58) in dem Rahmengestell (73) im vorderen Bereich des Einkaufswagens (76) angeordnet sind.

6. Vorrichtung nach einem der Ansprüche 1 bis 5, dadurch gekennzeichnet, daß mit dem Abfragegerät (56,70) Codierungen (54) oder Kennzeichnungen, die dem jeweiligen Produkt zugeordnet oder auf diesem oder auf dessen Verpackung vorgesehen sind, erfaßbar sind, wobei die Abfrageeinheit (56, 70) und das Ausgabegerät (32), bevorzugt über ein elektrisches Kabel (57) oder ein optisches Glasfaserkabel, in Verbindung stehen.

7. Vorrichtung nach einem der Ansprüche 1 bis 6, dadurch gekennzeichnet, daß zwischen Ausgabegerät (32) und der Datenverarbeitungseinheit (24) und / oder der Speichereinheit (30) ein drahtloses Übertragungssystem mit Einheiten (80, 82), insbesondere für elektromagnetischen Wellen oder Infrarostrahlen, vorgesehen ist.

8. Vorrichtung nach einem der Ansprüche 1 bis 7, dadurch gekennzeichnet, daß das Ausgabegerät (32) mit einer kuppelbaren Steckvorrichtung (88) mit der Datenverarbeitungseinheit (24) und / oder der Speichereinheit (30) verbindbar ist, wobei den einzelnen Produkten jeweils eine Kupplung bzw. ein Stecker der genannten Steckvorrichtung (88) zugeordnet ist.

9. Vorrichtung, insbesondere nach einem der Ansprüche 1 bis 8, dadurch gekennzeichnet, daß in Abhängigkeit der jeweiligen Position des Ausgabegerätes (32) insbesondere über die Sende- und Empfangseinheit (80, 82) im Warenhaus oder dergleichen eine Reaktion auf die jeweilige Position vorgenommen wird, wobei bevorzugt eine vorgebbare Vorauswahl von anzuwählenden Informationsmengen bereitgestellt wird.

Patentanwalt Dipl.-Phys. HANS KLOSE
Zugelassener Vertreter vor dem Europäischen Patentamt    - 19 -

6170194
6700 Ludwigshafen
Kurfürstenstraße 32

10. Vorrichtung nach einem der Ansprüche 1 bis 10, dadurch gekennzeichnet, daß in der Speichereinheit (30) für die visuelle Darstellung und die Textdarstellung verschiedene Speichermedien vorhanden sind, um bei Bedarf eine einfache Änderung vornehmen zu können, wobei mittels des Ausgabegerätes die Informationsmengen gemischt darstellbar sind.

11. Vorrichtung, insbesondere nach einem der Ansprüche 1 bis 12, dadurch gekennzeichnet, daß bei einer dezentralen Anordnung der Datenverarbeitungseinheit (24) und / oder der Speichereinheit (30) und / oder Teilen derselben in Verbindung mit dem Ausgabegerät (32) eine selektive Zuordnung, insbesondere durch Zuteilung unterschiedlicher Sendefrequenzen oder Wellenlängen, zu dem jeweiligen Ausgabegerät (32) vorgenommen ist.

12. Vorrichtung nach einem der Ansprüche 1 bis 11, dadurch gekennzeichnet, daß das Ausgabegerät (32) eine Stromversorgungseinheit (58) mit wiederaufladbaren Batterien enthält.

13. Vorrichtung nach einem der Ansprüche 1 bis 12, dadurch gekennzeichnet, daß die Aufladung der Batterien (58) und / oder die Datenübermittlung automatisch erfolgt, sobald das Ausgabegerät (32) mit dem Einkaufswagen (76) in einer bestimmten Stellung sich befindet.

14. Vorrichtung nach einem der Ansprüche 1 bis 13, dadurch gekennzeichnet, daß die Einkaufswagen (76) auf oder entlang einer Schiene in die Stellung fahrbar sind und daß mittels bevorzugt flexiblen Stromabnehmern (60) oder auf induktivem Wege die Stromübertragung und / oder die Datenübermittlung erfolgt.

Fig. 1

Fig. 2